# EUROPÄISCHE PATENTSCHRIFT

(11) **EP 1 500 300 B1**
(45) Veröffentlichungstag und Bekanntmachung des Hinweises auf die Patenterteilung: **09.11.2011**
(21) Anmeldenummer: 03732219.5
(22) Anmeldetag: 30.04.2003
(51) Int. Cl.: H04R 7/04, G06F 3/033

(54) **ANZEIGE MIT INTEGRIERTEM LAUTSPRECHER UND VERFAHREN ZUM ERKENNEN VON BERÜHRUNGEN EINER ANZEIGE**
DISPLAY COMPRISING AN INTEGRATED LOUDSPEAKER AND METHOD FOR RECOGNIZING THE TOUCHING OF THE DISPLAY
ECRAN COMPORTANT UN HAUT-PARLEUR INTEGRE ET PROCEDE DE DETECTION D'UN CONTACT AVEC L'ECRAN

(30) Priorität: 02.05.2002 DE 10219641
(43) Veröffentlichungstag der Anmeldung: 26.01.2005
(73) Patentinhaber: Hewlett-Packard Development Company, L.P., Houston, TX 77707 (US)
(72) Erfinder: AUBAUER, Roland, 81669 München (DE); BOCK, Gerhard, 82131 Gauting (DE); HÜLSKEMPER, Michael, 46569 HÜNXE (DE); KLINKE, Stefano Ambrosius, 50169 Kerpen (DE); LORENZ, Frank, 46397 Bocholt (DE); NIEMEYER, Ulf, D-45549 Sprockhoerel (DE); PÖRSCHMANN, Christoph, 45966 Gladbeck (DE)
(74) Vertreter: Samson & Partner
(86) Internationale Anmeldenummer: PCT/DE2003/001396
(87) Internationale Veröffentlichungsnummer: WO 2003/094573

(56) Entgegenhaltungen:
- WO-A-00/30025
- WO-A-00/54548
- US-A1- 2001 026 625

## Beschreibung

Die Erfindung betrifft eine Kombination aus Anzeige und Lautsprecher gemäß Anspruch 1 und ein Verfahren zum Erkennen von Berührungen einer Anzeige gemäß Anspruch 10.

Eine Vielzahl elektronischer Geräte, wie beispielsweise Mobiltelefone oder Personal Digital Assistents, besitzen sowohl eine Anzeige bzw. ein Display zum visuellen Darstellen von Information als auch einen Lautsprecher zur akustischen Wiedergabe von Informationen. Aufgrund der immer weiter fortschreitenden Miniaturisierung derartiger elektronischer Geräte wird seit geraumer Zeit über eine Integration von Komponenten der Mensch-Maschine-Schnittstelle nachgedacht.

Die Entwicklungen in dieser Richtung sind inzwischen soweit gediehen, daß Anzeigen, insbesondere einem LCD (Liquid Crystal Display), in die ein Lautsprecher integriert wird, zumindest im Prototypen-Stadium sind. Anzeigen mit integriertem Lautsprecher eignen sich vor allem für den Einsatz in Mobiltelefonen oder allgemein in Kommunikationsgeräten, die eine optische und akustische Komponente der Mensch-Maschine-Schnittstelle umfassen und zugleich geringe Abmessungen aufweisen.

Der Vorteil der Integration von Anzeige und Lautsprecher liegt nicht nur in der Platzersparnis, sondern auch in niedrigeren Kosten. Anstatt zweier Komponenten ist nur noch eine, wenn auch komplexere Komponente erforderlich. Dies erleichtert die Produktion von elektronischen Geräten, in denen diese Komponenten eingesetzt werden.

Bei den meisten Anzeigen mit integriertem Lautsprecher wird mindestens ein Teil einer schallabstrahlenden Fläche als An-Anzeige bzw. Display genutzt. Solche Lautsprecher werden auch als Displaylautsprecher bezeichnet. Typischerweise bildet bei solchen integrierten Systemen die aus einem transparenten Kunststoff bestehende Displayabdeckung, die das eigentliche Display vor Stößen und Kratzern schützen soll, auch die schallabstrahlende Fläche ("Membran") des Lautsprechers.

Aus der GB 2360901 A ist ein Lautsprecher bekannt, bei dem ein elektronisches Display als Membran genutzt wird. Dieser Lautsprecher ist vor allem zur Benutzung mit portablen elektronischen Geräten vorgesehen. Insbesondere werden Mobiltelefone als Einsatzgebiet erwähnt. Trotz der Einsparung von Komponenten durch diese Kombination aus Lautsprecher und Anzeige sind noch immer einige Komponenten der Mensch-Maschine-Schnittstelle eines elektronischen Geräts erforderlich, wie beispielsweise eine Tastatur oder ein Mikrofon bei einem Mobiltelefon.

Aus der WO 00/30025 ist ein Touchsystem bekannt, bei dem ein akustischer Wandler zur besseren Erkennung von Eingaben an einem Touchscreen verwendet wird. Ein derartiger Wandler kann akustische Signale, die von einem Touchscreen erzeugt sind, in elektrische oder akustische Signale umwandeln. Dabei werden sowohl der Wandler als auch der Kontroller separat vom Touchscreen aufgebaut. Eine Ersparung eines Touchscreens oder eines Lautsprechers wird durch diese Lösung ebenfalls nicht ermöglicht.

Aufgabe der vorliegenden Erfindung ist es, eine Anzeige mit integriertem Lautsprecher dahingehend zu verbessern,-daß eine weitere Einsparung von Komponenten der Mensch-Maschine-Schnittstelle erzielt werden kann.

Diese Aufgabe wird durch eine Anzeige mit integriertem Lautsprecher mit den Merkmalen gemäß Anspruch 6 und durch ein Verfahren zum Erkennen von Berührungen einer Anzeige mit den Merkmalen gemäß Anspruch 1 gelöst. Bevorzugte Ausgestaltungen der Erfindung ergeben sich aus den abhängigen Patentansprüchen.

Ein wesentlicher Gedanke der Erfindung besteht darin, daß man die mit einem Lautsprecher kombinierte Anzeige als Touchscreen bzw. berührungsempfindliche Anzeige ausbilden kann. Dadurch kann die Anzeige zur Dateneingabe genutzt werden. Die berührungsempfindliche Anzeige kann zumindest einen Teil der Funktionalität einer Tastatur übernehmen. Dadurch lassen sich in der Regel teure und produktionstechnisch aufwendige Tastaturkomponenten einsparen. Gemäß einem weiteren Gedanken der Erfindung werden ferner zumindest teilweise Komponenten eingespart, die für eine berührungsempfindliche Anzeige erforderlich sind. Dies wird erfindungsgemäß insbesondere dadurch erzielt, daß mindestens ein Teil des Lautsprechers, insbesondere des mindestens einen Teils der schallabstrahlenden Fläche des Lautsprechers, welcher die Anzeige bildet, ein Erkennungsmittel für Berührungen der Anzeige bildet. Es werden also Komponenten des Lautsprechers sowohl für die Funktionalität Lautsprecher als auch für die Funktionalität berührungsempfindliche Anzeige genutzt. Durch diese Mehrfachfunktion können weitere Komponenten der Mensch-Maschine-Schnittstelle eines elektronischen Geräts eingespart werden.

Konkret betrifft die Erfindung eine Anzeige mit integriertem Lautsprecher, welche berührungsempfindlich ist. Ferner ist mindestens ein Erkennungsmittel für Berührungen der Anzeige vorgesehen.

Wie bereits erwähnt, kann mindestens ein Teil der schallabstrahlenden Fläche der Anzeige, die den Lautsprecher bildet, ein Erkennungsmittel für Berührungen der Anzeige bilden. D.h., daß die für die berührungsempfindliche Anzeige genutzte schallabstrahlende Fläche gleichzeitig ein Erkennungsmittel für Berührungen bildet. Beispielsweise kann die schallabstrahlende Fläche zum Weiterleiten von Impulsen genutzt werden, die durch ein Berühren der Anzeige ausgelöst werden. Die berührungsempfindliche Anzeige kann auch als Übertragungsmittel genutzt werden, um Berührungen der Anzeige an ein weiteres Erkennungsmittel wie beispielsweise einen Sensor zu übermitteln. Dieses weitere Erkennungsmittel kann dann die übertragende "Berührung" auswerten.

Vorzugsweise wird ein Erkennungsmittel für Berührungen der Anzeige durch mindestens einen Aktuator des Lautsprechers und/oder durch mindestens einen Sensor, insbesondere einen akustischen oder optischen Sensor, gebildet. Im ersten Fall besitzt mindestens ein Aktuator des Lautsprechers eine Doppelfunktion: Er agiert nicht nur als Aktuator, sondern auch als Sensor. Hierdurch können Komponenten für die berührungsempfindliche Anzeige eingespart werden. Im zweiten Fall werden spezielle Sensoren eingesetzt, die ein Erkennungsmittel für Berührungen der Anzeige bilden.

Derartige Aktuatoren und Sensoren werden vorzugsweise in der Nähe des Randes oder am Rand der schallabstrahlenden Fläche des Lautsprechers angeordnet. Im Falle akustischer Sensoren bietet sich diese Anordnung für eine genaue Detektion einer Berührung der Anzeige an. Beispielsweise können als akustische Sensoren kleine Mikrofone am Rand der schallabstrahlenden Fläche eingesetzt werden. Diese Mikrofone können einen durch die schallabstrahlende Fläche abgestrahlten Ton detektieren, dessen Frequenz in einem für Menschen nicht hörbaren Bereich liegt. Wird nun die Anzeige beispielsweise mittels eines Stiftes berührt, so treten Änderungen an der Schallauskopplung durch die schallabstrahlende Fläche und damit an dem abgestrahlten Ton auf. Diese Änderungen können durch die Mikrofone detektiert werden.

In einer bevorzugten Ausführungsform des Lautsprechers sind bzw. ist mindestens ein Aktuator und/oder Sensor unterhalb des wenigstens einen, die Anzeige bildenden Teils der schallabstrahlenden Fläche des Lautsprechers angeordnet. Dies bietet sich vor allem dann an, wenn als Aktuator bzw. Sensor ein piezoelektrisches Element eingesetzt wird, das beispielsweise mechanische Einflüsse auf die Anzeige aufgrund von Berührungen detektiert. Mindestens ein Aktuator bzw. Sensor kann alternativ oder zusätzlich auch auf dem wenigstens einen, die Anzeige bildenden Teil der schallabstrahlenden Fläche des Lautsprechers angeordnet sein. Beispielsweise können als Aktuatoren bzw. Sensoren eingesetzte piezoelektrische Elemente direkt auf der Seite der schallabstrahlenden Fläche angeordnet sein, die der akustisch aktiven Seite abgewandt ist, also unterhalb der schallabstrahlenden Fläche.

In einer besonders bevorzugten Ausführungsform umfasst der mindestens eine Aktuator mindestens ein piezoelektrisches Element und/oder einen elektromagnetischen Wandler. Zum Antreiben der schallabstrahlenden Fläche können sowohl piezoelektrische Elemente (Piezo-Lautsprecher) als auch elektromagnetische Wandler (dynamischer Lautsprecher) eingesetzt werden. Diese Elemente wandeln für die Lautsprecherfunktionalität eine elektrische Größe in eine mechanische Größe um. Umgekehrt kann ausgenutzt werden, daß diese Elemente auch mechanische Größen in elektrische Größen umwandeln können. Diese Funktionalität kann für die Detektion von Berührungen der Anzeige ausgenutzt werden. Werden eigene Sensoren zur Detektion von Berührungen der Anzeige eingesetzt, so werden piezoelektrische Elemente bevorzugt. Derartige Sensoren können in ihren Abmessungen sehr klein sein und daher gut in einen Lautsprecher integriert werden.

Schließlich können bei dem erfindungsgemäßen Lautsprecher noch Auswertemittel zum Auswerten des von mindestens einem Aktuator und/oder von mindestens einem Sensor gelieferten Signals vorgesehen sein. Diese Auswertemittel können beispielsweise in einem Chip integriert sein, der mit dem mindestens einen Aktuator und/oder dem mindestens einen Sensor derart verbunden ist, dass er Signale von diesen empfängt.

Die Erfindung betrifft ferner ein Verfahren zum Erkennen von Berührungen einer Anzeige, die berührungsempfindlich und in einen Lautsprecher integriert ist. Hierbei bildet mindestens ein Teil einer schallabstrahlenden Fläche des Lautsprechers die Anzeige. Berührungen der Anzeige werden von einem Erkennungsmittel erkannt.

Beispielsweise kann eine Berührung der Anzeige durch eine geänderte Auskopplung von Schall über die schallabstrahlende Fläche des Lautsprechers und/oder durch Veränderungen der stehenden Wellen und/oder Reflexionen auf der Oberfläche erkannt werden. Vorzugsweise wird bzw. werden die geänderte Auskopplung von Schall und/oder eine stehende Welle und/oder Reflexionen mit mindestens einem Sensor, insbesondere einem akustischen oder optischen Sensor aufgenommen. Hierbei werden die geänderte Auskopplung von Schall und eine stehende Welle über einen akustischen Sensor aufgenommen, während Reflexionen prinzipiell sowohl akustisch als auch optisch erfasst werden können.

Vorzugsweise sendet der Lautsprecher ein Schallsignal aus, daß eine Frequenz außerhalb des hörbaren Frequenzbereichs von Schallwellen besitzt. Eine Berührung der Anzeige kann anhand von Änderungen des ausgesendeten Schallsignals erkannt werden. Vorzugsweise wird das Schallsignal zusammen mit Schallsignalen ausgesendet, deren Frequenzen im für Menschen hörbaren Bereich liegt, ist diesen also überlagert. Dadurch, daß das Schallsignal eine Frequenz außerhalb des hörbaren Frequenzbereichs besitzt, ist es von einem Menschen nicht wahrnehmbar und stört somit nicht die akustische Qualität eines elektronischen Geräts, in dem das erfindungsgemäße Verfahren eingesetzt wird.

Eine Berührung der Anzeige kann auch durch eine Rückwirkung auf mindestens einen Aktuator des Lautsprechers erkannt werden, beispielsweise durch eine mechanische Bewegung eines elektromagnetischen Wandlers des Lautsprechers oder eines piezoelektrischen Elements zum Antreiben des Lautsprechers bei einer Berührung der Anzeige. Demgemäß wandelt der mindestens eine Aktuator vorzugsweise die durch die Berührung auf die Anzeigen einwirkende Kraft in ein elektrisches Signal um, das dann zur Detektion der Berührung weiterverarbeitet werden kann.

Um eine Position einer Berührung auf der Anzeige zu erkennen, kann z.B. die Zeitdifferenz zwischen elektrischen Signalen von mindestens zwei Aktuatoren, welche die Berührung detektieren, ausgewertet werden. Es ist auch eine Impedanzmessung und/oder eine Differenzpegelmessung mit dem Pegel von mindestens zwei Signalen unterschiedlicher Sensoren und/oder Aktuatoren und/oder eine Dämpfungsmessung von durch die Schallfläche abgestrahlten Schallwellen zur Bestimmung der Position einer Berührung auf der Anzeige möglich. Schließlich können auch Mehrwegeausbreitungen und/oder Reflexionen von durch die Berührung der Anzeige ausgelösten Wellenausbreitungen auf der Oberfläche ausgewertet werden. Die Ergebnisse dieser Messungen und/oder Berechnungen, die alternativ oder gemeinsam erfolgen können, können zu Steuerungszwecken unterschiedlichster Art eingesetzt werden. Bei der Auswertung von Mehrwegeausbreitungen und/oder Reflexionen von durch die Schallfläche abgestrahlten Schallwellen wird vorzugsweise ein eingelerntes neuronales Netz zur Signalverarbeitung herangezogen, das eine zuverlässige Erkennung der Position der Berührung ermöglicht.

Weitere Vorteile und Anwendungsmöglichkeiten der Erfindung ergeben sich aus der nachfolgenden Beschreibung von Ausführungsbeispielen in Verbindung mit den Zeichnungen. Diese zeigen in
- Fig.1: ein erstes Ausführungsbeispiel eines Lautsprechers mit integrierter Anzeige, bei dem Sensoren zum Erkennen von Berührungen der Anzeige vorgesehen sind, in Draufsicht;
- Fig.2: den in Fig.1 dargestellten Lautsprecher im Querschnitt,
- Fig.3: ein zweites Ausführungsbeispiel eines Lautsprechers mit integrierter Anzeige, bei dem Berührungen der Anzeige durch eine Rückwirkung auf Aktuatoren des Lautsprechers erkannt werden; und
- Fig.9 4: ein drittes Ausführungsbeispiel eines Lautsprechers mit integrierter Anzeige, bei dem unterhalb der schallabstrahlenden Fläche des Lautsprechers ange- ordnete Sensoren zum Erkennen von Berührungen der Anzeige vorgesehen sind.

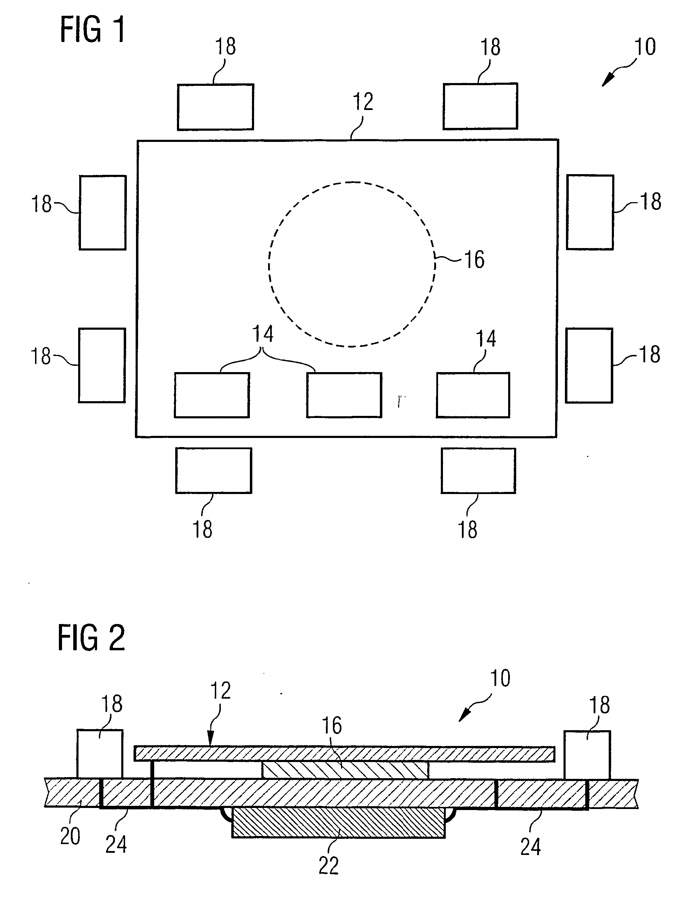

Fig.1 zeigt einen Lautsprecher mit integrierter Anzeige 10. Der Lautsprecher 10 umfasst eine Schallfläche 12 mit der Anzeige. Zur Visualisierung der Anzeige sind Symbole 14 dargestellt. Diese Symbole können beispielsweise eine bestimmte Funktion kennzeichnen, die bei Antippen der Anzeige an der Stelle bzw. Position des jeweiligen Symbols ausgelöst wird. Typische Funktion können beispielsweise einfache Funktionen wie Anzeige-Beleuchtung "An/Aus" und Klingelton "An/Aus", eine Laut-/Leise-Steuerung über einen +/- Regler, einen sogenannten Slider, eine komplexere Menüsteuerung oder auch eine virtuelle Tastatur sein.

Als Anzeige wird vorzugsweise ein LCD eingesetzt. Gleichzeitig dient das LCD als etwa plane schallabstrahlende Fläche des Lautsprechers. Um die schallabstrahlende Fläche bzw. Schallfläche 12 anzutreiben, besitzt der Lautsprecher 10 einen Aktuator 16, der unterhalb der Schallfläche 12 angeordnet ist. Genauer gesagt ist der Aktuator 16 auf der Seite der Schallfläche 12 angeordnet, die der schallabstrahlenden Seite abgewandt ist. Der Aktuator 16 kann ein piezoelektrisches Element oder ein elektromagnetischer Wandler, beispielsweise eine Spule in einem Magnetfeld wie bei einem dynamischen Lautsprecher, sein.

An jeder Randseite der etwa quadratischen Schallfläche 12 sind jeweils zwei Sensoren 18 angeordnet. Insgesamt sind acht Sensoren 18 vorgesehen. Die Sensoren 18 sind vorzugsweise kleine Mikrofone. Sie detektieren einen Ton, der von der Schallfläche 12 abgestrahlt wird. Dieser Ton besitzt eine Frequenz, die außerhalb des von einem Menschen hörbaren Frequenzbereichs liegt. Wird die Schallfläche mit Anzeige 12 an einer bestimmten Stelle beispielsweise mittels eines Stiftes berührt, so verändert sich die Auskopplung des Tons durch die Schallfläche. Dies wird durch die Sensoren 18 registriert.

Hierdurch kann eine Berührung der Anzeige festgestellt und aufgrund der speziellen Anordnung der Sensoren erkannt werden, wo die Berührung in etwa auf dem Display bzw. der Anzeige stattgefunden hat. Wird beispielsweise das Symbol 14 in der linken unteren Ecke der Schallfläche 12 mit Anzeige von einem Benutzer mittels eines Stiftes angetippt, so wird in diesem Bereich der Schallfläche 12 die Auskopplung des Tons besonders stark beeinflußt, so daß die in der Nähe dieses Bereichs angeordneten Sensoren 18 ein besonders intensives Erkennungssignal liefern, das von einer nachgeschalteten Auswerteelektronik entsprechend verarbeitet werden kann.

Der in Fig.1 dargestellte Lautsprecher mit integrierter Anzeige 10 ist in Fig.2 im Querschnitt dargestellt. Der Aktuator 16 ist zwischen der Schallfläche mit Anzeige 12 und einer Platine 20 angeordnet, auf welcher der Lautsprecher 10 montiert ist. Auf der Platine 20 sind ferner die Sensoren 18 sowie ein Chip 22 montiert. Der Chip 22 dient zur Auswertung der von den Sensoren 18 erzeugten Erkennungssignale sowie zur Ansteuerung der Anzeige in der Schallfläche 12. Mit anderen Worten steuert der Chip 22 die Ein- und Ausgabefunktionalität der Anzeige in der Schallfläche 12. Hierzu ist der Chip 22 über elektrische Leitungen 24 auf der Platine mit den Sensoren 18 und der Anzeige in der Schallfläche 12 verbunden. Vorzugsweise umfasst er eine integrierte Signalverarbeitungsschaltung, beispielsweise einen Signalprozessor oder ein neuronales Netzwerk zum Verarbeiten der von den Sensoren 18 gelieferten Signale und eine LCD-Ansteuereinheit zum Darstellen von Symbolen 14 auf der Anzeige in der Schallfläche 12.

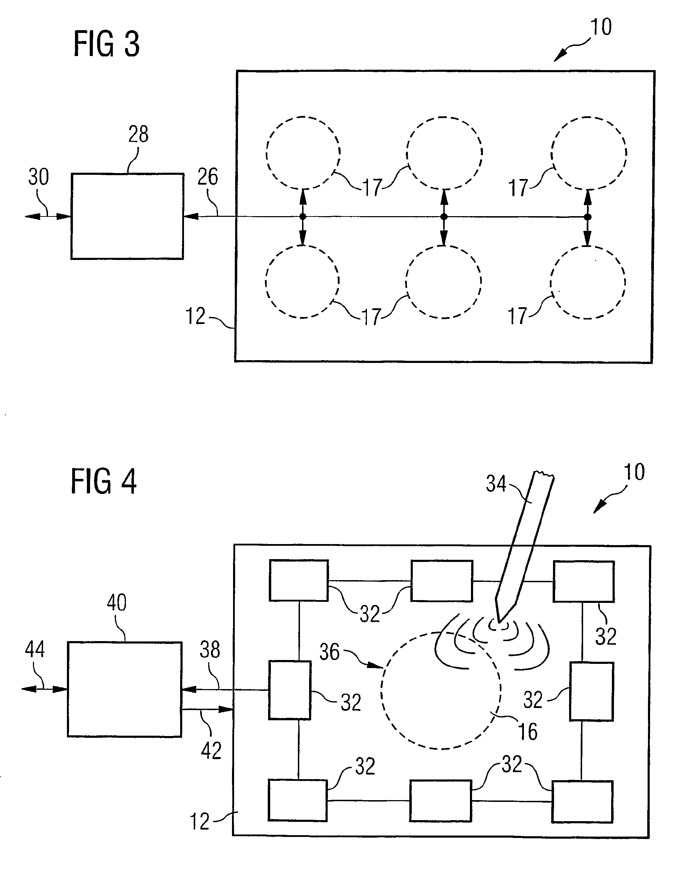

Fig.3 zeigt einen Lautsprecher 10 mit integrierter Anzeige, bei dem Aktuatoren 17 eingesetzt werden, die jeweils einen integrierten Sensor aufweisen. Derartige Aktuatoren können beispielsweise herkömmliche elektromagnetische Wandler oder piezoelektrische Elemente zum Antreiben der Schallfläche des Lautsprechers sein. Die elektromagnetischen Wandler bzw. piezoelektrischen Elemente werden hier auch umgekehrt zur Detektion einer auf die Anzeige bzw. Schallfläche wirkenden Kraft und damit als Sensoren genutzt.

Die Aktuatoren 17 sind etwa gleichmäßig verteilt über die Fläche angeordnet, die von der Schallfläche 12 mit Anzeige des Lautsprechers 10 bedeckt wird. Hierdurch können Berührungen der gesamten zur Anzeige genutzten Fläche detektiert werden. Durch die Anzahl der Aktuatoren wird die Auflösung der Detektion der Position einer Berührung auf der Anzeige beeinflußt. Für eine Detektion mit mittlerer Auflösung reicht eine kleinere Anzahl der Aktuatoren aus, beispielsweise sechs. Hierdurch kann ein teuerer herkömmlicher Touchscreen eingespart werden, dessen Komplexität für viele Bedienungsfälle nicht benötigt wird.

Eine Auswerte- und Steuerschaltung dient zum Auswerten von Signalen, die von den integrierten Sensoren der Aktuatoren 17 erzeugt werden, insbesondere bei einer Berührung der Anzeige in der Schallfläche 12. Ferner werden von der Auswerte- und Steuerschaltung 28 Steuersignale 26 erzeugt, die zum Ansteuern der Aktuatoren 17 und damit zum Aussenden von Schall über die Schallfläche 12 dienen. Über externe Signale 30 ist die Auswerte- und Steuerschaltung mit weiteren elektronischen Bauelementen beispielsweise eines Mobiltelefons oder Personal Digital Assistants koppelbar, in denen der Lautsprecher 10 eingesetzt werden kann.

Fig.4 zeigt einen Lautsprecher 10 mit integrierter Anzeige, bei dem etwa mittig auf der Schallfläche 12 mit Anzeige ein Aktuator 16, genauer gesagt unterhalb der Schallfläche 12 zum Antreiben derselben, angeordnet ist. Im Randbereich unterhalb der Schallfläche sind ebenfalls Sensoren 32 etwa gleichmäßig verteilt angeordnet, die zur Detektion von Berührungen der Schallfläche mit Anzeige 12 dienen. Bei dieser Ausführungsform werden wie bei dem Lautsprecher von Fig. 1 und 2 getrennte Aktuatoren und Sensoren benutzt. Eine Berührung der Anzeige ist durch den dargestellten Stift 34 angedeutet, der die Schallfläche 12 mit Anzeige antippt und hierbei eine Welle 36 erzeugt. Die Welle kann von den Sensoren 32 detektiert werden, die als piezoelektrische Elemente ausgebildet sein können.

Die von den Sensoren 32 gelieferten Sensorsignale 38 werden einer Auswerte- und Anzeigesteuerschaltung 40 zugeführt. Die Auswerte- und Anzeigesteuerschaltung 40 wertet die von den Sensoren 32 gelieferten Sensorsignale 38 aus und steuert über Anzeigesignale 42 die Anzeige in der Schallfläche 12. Über externe Signale 44 ist die Auswerte- und Anzeigesteuerschaltung mit weiteren elektronischen Schaltungen beispielsweise zur Signalverarbeitung und/oder Steuerung der Anzeige und/oder des Lautsprechers verbindbar.

Eine Grundidee und naheliegende Ausführung der Erfindung ist, mit nur 1 oder 2 Aktuatoren, ohne zusätzliche Sensoren, Berührungen des Displays zu detektieren (Vorteil: Kostenersparnis, Nachteil: geringe Detektionsgenauigkeit, wo das Display berührt wurde).

## Patentansprüche

1. Verfahren zum Erkennen von Berührungen einer Anzeige, die berührungsempfindlich und mit einem Lautsprecher (10) - kombiniert ist, bei dem mindestens ein Teil einer schallabstrahlenden Fläche (12) des Lautsprechers die Anzeige bildet und ein Erkennungsmittel Berührungen der Anzeige erkennt, wobei der Lautsprecher (10) ein Schallsignal aussendet, das eine Frequenz außerhalb des hörbaren Frequenzbereiches von Schallwellen besitzt, wobei Änderungen des ausgesendeten Schallsignals zur Erkennung einer Berührung der Anzeige erkannt werden, **dadurch gekennzeichnet, dass** das Schallsignal zusammen mit Schallsignalen mit Frequenzen im hörbaren Bereich ausgesendet wird.

2. Verfahren nach Anspruch 1, **dadurch gekennzeichnet, dass** eine Berührung der Anzeige durch eine geänderte Auskoppelung von Schall über die schallabstrahlende Fläche (12) des Lautsprechers und/oder durch mindestens eine stehende Welle und/oder Reflexionen erkannt wird, die mit mindestens einem Sensor (18; 32), insbesondere einem akustischen oder optischen Sensor, aufgenommen werden.

3. Verfahren nach dem Anspruch 1 oder 2, **dadurch gekennzeichnet, dass** eine Berührung durch eine Rückwirkung auf mindestens einen Aktuator (17) des Lautsprechers erkannt wird.

4. Verfahren nach Anspruch 3, **dadurch gekennzeichnet, dass** der mindestens eine Aktuator die durch die Berührung auf die Anzeige einwirkende Kraft in ein elektrisches Signale umwandelt.

5. Verfahren nach Anspruch 4, **dadurch gekennzeichnet, dass** eine Position einer Berührung auf der Anzeige erkannt wird, indem
- die elektrischen Signale von mindestens zwei Aktuatoren, welche die Berührung detektieren, ausgewertet werden, insbesondere miteinander verglichen werden und/oder
- eine Impedanzmessung und/oder
- eine Differenzpegelmessung mit dem Pegel von mindestens zwei Signalen unterschiedlicher Sensoren und/oder Aktuatoren und/oder
- eine Dämpfungsmessung von durch die Schallfläche abgestrahlten Schallwellen durchgeführt wird und/oder
- Mehrwegeausbreitungen und/oder Reflexionen von sich auf der Schallfläche ausbreitenden Wellen ausgewertet werden.

6. Lautsprecher (10) zur Durchführung des Verfahrens nach einem der obigen Ansprüche, bei der mindestens ein Teil einer schallabstrahlenden Fläche (12) des Lautsprechers die Anzeige bildet, die berührungsempfindlich ist, und mindestens ein Erkennungsmittel für Berührungen der Anzeige vorgesehen ist, **dadurch gekennzeichnet, dass** als Sensor zur Detektion des außerhalb des hörbaren Frequenzbereichs liegenden Schallsignals ein Mikrophon vorgesehen ist.

7. Lautsprecher nach Anspruch 6, **dadurch gekennzeichnet, dass** mehrere Sensoren (32) verteilt über der Fläche angeordnet sind, die von der schallabstrahlenden Fläche (12) des Lautsprechers aufgespannt wird.

8. Lautsprecher nach einem der Ansprüche 6 oder 7, **dadurch gekennzeichnet, dass** Auswertemittel (28; 40) zum Auswerten des von dem mindestens einen Sensor (18; 32) gelieferten Signal (26; 38) vorgesehen sind.

## Claims

1. A method of detecting contacts with a display, which is touch-sensitive and combined with a loudspeaker (10), wherein at least a part of a sound-emitting surface (12) of the loudspeaker forms the display and a detecting means detects contacts of the display, wherein the loudspeaker (10) outputs an audio signal having a frequency outside an audible frequency range of sound waves, wherein changes of the outputted audio signal are detected to detect a contact of the display, **characterized in that** the audio signal is outputted together with audio signals having frequencies in an audible frequency range.

2. A method according to claim 1, characterize in that a contact of the display is detected through a changed decoupling of sound via the sound-emitting surface (12) of the loudspeaker and/or through at least one standing wave and/or reflections, which are sensed by means of at least one sensor (18, 32), particularly an acoustic sensor or an optical sensor.

3. A method according to claim 1 or 2, **characterize in that** a contact is detected by a reaction onto at least one actuator (17) of the loudspeaker.

4. A method according to claim 3, **characterized in that** the at least one actuator converts the force acting on the display as a result of the contact into an electrical signal.

5. A method according to claim 4, **characterized in that** a position of a contact of the display is detected by
- evaluating the electrical signals from at least two actuators detecting the contact, particularly comparing the same with each other; and/or
- an impedance measurement; and/or
- a differential level measurement of a level of at least two signals from different sensors and/or actuators, and/or
- an attenuation measurement of sound waves emitted by the sound-emitting surface; and/or
- evaluating multiple-path propagations and/or reflections of waves propagating on the sound-emitting surface.

6. A loudspeaker (10) for carrying out the method according to one of the preceding claims, wherein at least a part of a sound-emitting surface (12) of the loudspeaker forms the display, which is touch-sensitive, and at least one detection means for contacts of the display is provided, **characterized in that** a microphone is provided as sensor for detection the sound signal having a frequency outside an audible frequency range.

7. A loudspeaker according to claim 6, **characterized in that** a plurality of sensors (32) are distributed over an area defined by the sound-emitting surface (12) of the loudspeaker.

8. A loudspeaker according to claim 6 or 7, **characterized in that** evaluation means (28, 40) are provided for evaluating signals (26, 38) provided by the at least one sensor (18, 32).

## Revendications

1. Procédé pour détecter des contacts sensitifs sur un écran de visualisation qui est sensible au toucher et est combiné à un haut-parleur (10), dans lequel au moins une partie d'une surface (12) du haut-parleur rayonnant le son forme l'écran de visualisation, et dans lequel un moyen de détection détecte des contacts sensitifs sur l'écran de visualisation, le haut-parleur (10) émettant un signal sonore qui possède une fréquence située en-dehors de la gamme de fréquence audible d'ondes sonores, la détection d'un contact sensitif sur l'écran de visualisation étant réalisée par la détection de variations du signal sonore émis, **caractérisé en ce que** ledit signal sonore est émis en commun avec des signaux sonores présentant des fréquences dans la gamme audible.

2. Procédé selon la revendication 1, **caractérisé en ce qu'**un contact sensitif sur l'écran de visualisation est détecté par une variation de sortie du son par la surface (12) du haut-parleur rayonnant le son, et/ou par au moins une onde stationnaire et/ou des réflexions qui sont enregistrées à l'aide d'au moins un détecteur (18 ; 32), notamment un détecteur acoustique ou optique.

3. Procédé selon la revendication 1 ou la revendication 2, **caractérisé en ce qu'**un contact sensitif est détecté par une réaction sur au moins un actionneur (17) du haut-parleur.

4. Procédé selon la revendication 3, **caractérisé en ce que** ledit au moins un actionneur convertit la force agissant sur l'écran de visualisation suite au contact sensitif, en un signal électrique.

5. Procédé selon la revendication 4, **caractérisé en ce qu'**une position d'un contact sensitif sur l'écran de visualisation est détectée,
- en traitant les signaux électriques d'au moins deux actionneurs qui détectent le contact sensitif, notamment en comparant les uns aux autres, et/ou
- en effectuant une mesure d'impédance, et/ou
- en effectuant une mesure de différence de niveau avec le niveau d'au moins deux signaux de détecteurs et/ou actionneurs différents, et/ou
- en effectuant une mesure d'atténuation d'ondes sonores rayonnées par la surface sonore, et/ou
- en exploitant des propagations multidirectionnelles et/ou des réflexions d'ondes se propageant sur la surface sonore.

6. Haut-parleur (10) pour la mise en oeuvre du procédé selon l'une des revendications précédentes, dans lequel au moins une partie d'une surface (12) du haut-parleur rayonnant le son forme l'écran de visualisation qui est sensible au toucher, et dans lequel au moins un moyen de détection est prévu pour les contacts sensitifs sur l'écran de visualisation, **caractérisé en ce qu'**un microphone est prévu comme détecteur pour la détection du signal sonore situé en-dehors de la gamme de fréquence audible.

7. Haut-parleur selon la revendication 6, **caractérisé en ce que** plusieurs détecteurs (32) sont agencés de manière répartie sur la surface qui est couverte par la surface (12) du haut-parleur rayonnant le son.

8. Haut-parleur selon l'une des revendications 6 ou 7, **caractérisé en ce que** des moyens de traitement (28; 40) sont prévus pour traiter le signal (26; 38) fourni par ledit au moins un détecteur (18; 32).
